# EUROPEAN PATENT APPLICATION

(11) **EP 3 786 128 A1**
(43) Date of publication of application: **03.03.2021**
(21) Application number: 19792942.5
(22) Date of filing: 13.03.2019
(51) Int. Cl.: C03C 27/06, E06B 3/677

(54) **GLASS PANEL UNIT, GLASS WINDOW, METHOD FOR PRODUCING GLASS PANEL UNIT, AND METHOD FOR PRODUCING GLASS WINDOW**

(30) Priority: 27.04.2018 JP 2018087725
(71) Applicant: Panasonic Intellectual Property Management Co., Ltd., Osaka-shi, Osaka 540-6207 (JP)
(72) Inventor: SHIMIZU, Takeshi, Osaka-shi, OSAKA 540-6207 (JP); NONAKA, Masataka, Osaka-shi, OSAKA 540-6207 (JP); ISHIKAWA, Haruhiko, Osaka-shi, OSAKA 540-6207 (JP); URIU, Eiichi, Osaka-shi, OSAKA 540-6207 (JP); HASEGAWA, Kazuya, Osaka-shi, OSAKA 540-6207 (JP); ISHIBASHI, Tasuku, Osaka-shi, OSAKA 540-6207 (JP); ABE, Hiroyuki, Osaka-shi, OSAKA 540-6207 (JP)
(74) Representative: Müller-Boré & Partner Patentanwälte PartG mbB
(86) International application number: PCT/JP2019/010405
(87) International publication number: WO 2019/208002

(57) **Abstract**

A glass panel unit having an exhaust pipe not protruding from the glass panel unit and an evacuation port tightly sealed, a glass window, a method for producing the glass panel unit, and a method for producing the glass window are provided. A glass panel unit includes a first panel (1), a second panel (2), a seal member (41) having a frame shape, a pore sealing material (42), and a bonding portion (47). The seal member (41) hermetically bonds a peripheral portion of the first panel (1) and a peripheral portion of the second panel (2) together such that a hermetically sealed space (51) in an evacuated state is formed between the first panel (1) and the second panel (2). The pore sealing material (42) hermetically seals an evacuation port (50) formed in one of the first panel (1) and the second panel (2). The bonding portion (47) is bonded to the first panel (1) and the second panel (2) at part of a peripheral portion of the evacuation port (50) and to suppress the first panel (1) and the second panel (2) from separating from each other.

## Description

### Technical Field

The present invention relates to glass panel units, glass windows, methods for producing glass panel units, and methods for producing glass windows, and specifically, to: a glass panel unit including a first panel, a second panel, and a seal member having a frame shape; a glass window including the glass panel unit; a method for producing the glass panel unit; and a method for producing the glass window including the glass panel unit.

### Background Art

Methods for producing glass panel units having high thermal insulation properties have been proposed. For example, Patent Literature 1 discloses a method of heating, in a melting furnace, the entirety of a pair of sheets of glass with an adhesive material and an adsorption material being disposed therebetween to a temperature (465°C) higher than 434°C which is the melting temperature of the adhesive material, thereby bonding the pair of sheets of glass together via the adhesive material thus melted. This forms a hermetically sealed space (an internal space) is formed between the pair of sheets of glass and the adhesive material.

Then, while the temperature in the melting furnace is maintained at a temperature (400°C) lower than 434°C, the hermetically sealed space is evacuated, and at the temperature at this time, the adsorption material is activated. Thereafter, a so-called tip-off of melting a tip portion of an exhaust pipe protruding from the sheet of glass seals the hermetically sealed space with an evacuated state in the hermetically sealed space being maintained.

### Citation List

### Patent Literature

Patent Literature 1: WO 2014/136151 A1

### Summary of Invention

The above-described known manufacturing method has the problem that the exhaust pipe protrudes from the glass panel unit, which impairs the appearance of the glass panel unit.

In view of the foregoing, it is an object of the present invention to provide a glass panel unit having an exhaust pipe not protruding from the glass panel unit and an evacuation port tightly sealed, a glass window, a method for producing the glass panel unit, and a method for producing the glass window.

A glass panel unit according to one aspect of the present disclosure includes a first panel including a glass panel, a second panel including a glass panel, a seal member having a frame shape, a pore sealing material, and a bonding portion. The second panel is disposed to face the first panel. The seal member hermetically bonds a peripheral portion of the first panel and a peripheral portion of the second panel together such that a hermetically sealed space in an evacuated state is formed between the first panel and the second panel. The pore sealing material hermetically seals an evacuation port formed in one of the first panel and the second panel. The bonding portion is bonded to the first panel and the second panel at part of a peripheral portion of the evacuation port.

A glass window according to another aspect of the present disclosure includes the glass panel unit and a frame in which a peripheral portion of the glass panel unit is fit.

A method according to still another aspect of the present disclosure is a method for producing a glass panel unit and includes a preparation step, a bonding step, an evacuation step, and a sealing step. The preparation step is a step of preparing a first substrate including a glass panel and a second substrate including a glass panel. The bonding step is a step of bonding the first substrate and the second substrate together via an adhesive material having a frame shape and a bonding material at a peripheral portion of an evacuation port formed in one of the first substrate and the second substrate to form an internal space surrounded by the first substrate, the second substrate, and the adhesive material. The evacuation step is a step of evacuating the internal space. The sealing step is a step of sealing up the internal space in an evacuated state.

A method according to yet another aspect of the present disclosure is a method for producing a glass window and includes an assembling step of fitting the glass panel unit produced by the method for producing the glass panel unit in a frame.

### Brief Description of Drawings

FIG. 1 is a perspective view illustrating a glass panel unit of a first embodiment;
FIG. 2 is a plan view illustrating the glass panel unit;
FIG. 3 is a sectional view taken along line A-A of FIG. 2;
FIG. 4 is a perspective view illustrating a process for producing the glass panel unit;
FIG. 5 is a plan view illustrating a work in progress of the glass panel unit;
FIG. 6 is a cross-sectional view taken along line B-B of FIG. 5;
FIG. 7 is a partially cutaway side view of a main part of the work in progress illustrating how the internal space of the work in progress is evacuated;
FIG. 8 is a partially cutaway side view of a main part of the work in progress illustrating how the internal space of the work in progress is sealed;
FIG. 9A is a plan view illustrating a main part of a glass panel unit of a first variation;
FIG. 9B is a plan view illustrating a main part of a glass panel unit of a second variation;
FIG. 9C is a plan view illustrating a main part of a glass panel unit of a third variation;
FIG. 9D is a plan view illustrating a main part of a glass panel unit of a fourth variation;
FIG. 10 is a plan view illustrating a glass panel unit of a second embodiment;
FIG. 11 is a sectional view taken along line C-C of FIG. 10; and
FIG. 12 is a plan view illustrating a glass window according to a third embodiment.

### Description of Embodiments

A glass panel unit, a glass window, a method for producing the glass panel unit, and a method for producing the glass window of the present disclosure will be described with reference to the drawings. Note that on those drawings, respective components of the glass panel unit are depicted only schematically. That is to say, the dimensions and shapes of these components illustrated on those drawings are different from actual ones.

### (Glass Panel Unit)

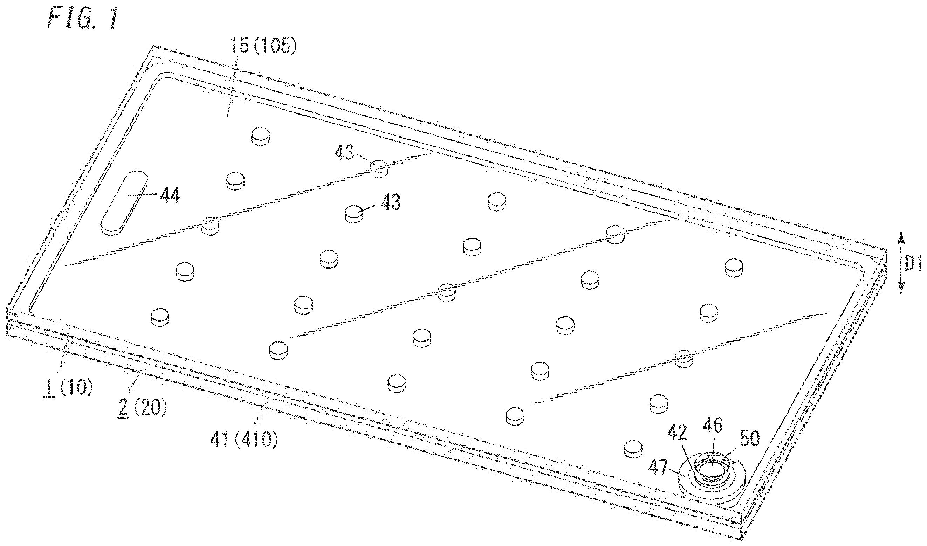

First of all, components of a glass panel unit according to a first embodiment will be described with reference to FIGS. 1 to 3.

The glass panel unit of the first embodiment includes a first panel 1, a second panel 2, a seal member 41, a pore sealing material 42, and a bonding portion 47.

The first panel 1 and the second panel 2 are disposed to face each other with a narrow gap left between them. The first panel 1 and the second panel 2 are parallel to each other, and between the first panel 1 and the second panel 2, the seal member 41, a plurality of (a large number of) pillars 43, and a gas adsorbent 44 are disposed.

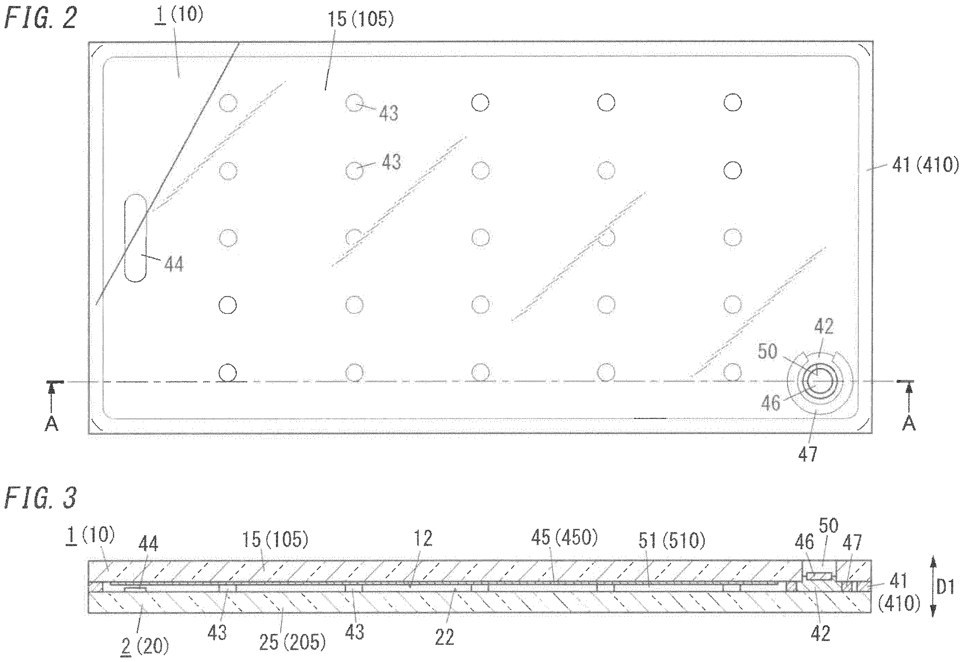

The first panel 1 includes at least a glass panel 15. The first panel 1 includes the glass panel 15 and a low-emissivity film 45 (see FIG. 3) stacked on the glass panel 15. The low-emissivity film 45 is a film containing metal, such as silver, with low emissivity and has the capability of reducing the transfer of heat due to radiation. The second panel 2 includes at least a glass panel 25. The second panel 2 includes the glass panel 25.

The glass panel 15 and the glass panel 25 may be configured as any of various types of panels made of soda lime glass, high strain point glass, chemically tempered glass, alkali-free glass, quartz glass, Neoceram, thermally tempered glass, or any other suitable glass.

Most of a counter surface 12, facing the second panel 2, of the first panel 1 is constituted of the surface of the low-emissivity film 45. Most of a counter surface 22, facing the first panel 1, of the second panel 2 is constituted of the surface of the glass panel 25.

The seal member 41 is formed in a frame shape and may be made of a glass frit having a low melting point, for example. The seal member 41 is hermetically bonded to respective peripheral portions of the first and second panels 1 and 2. The respective peripheral portions of the first and second panels 1 and 2 are hermetically bonded together with the seal member 41.

The plurality of pillars 43 are dispersed so as to be spaced apart from each other. Each of the plurality of pillars 43 is located to be in contact with the counter surfaces 12 and 22 of the first panel 1 and the second panel 2 respectively.

The plurality of pillars 43 are located to be surrounded by the seal member 41 having the frame shape and functions to maintain a prescribed distance between the first panel 1 and the second panel 2. All or some of the plurality of pillars 43 may be made of a resin such as polyimide.

The glass panel unit of the first embodiment has an evacuation port 50. The evacuation port 50 is formed in one panel of the first panel 1 and the second panel 2. In the first embodiment, of the first panel 1 and the second panel 2, the first panel 1 has the evacuation port 50. The pore sealing material 42 includes, for example, glass frit. The evacuation port 50 is hermetically sealed with the pore sealing material 42. The evacuation port 50 will be used to exhaust the gas in a step (i.e., an evacuation step to be described later) during a production process of the glass panel unit. The evacuation port 50 penetrates the first panel 1 in a thickness direction D1. The thickness direction D1 is the thickness direction of the entirety of the glass panel unit and is the thickness direction of the first panel 1 and the second panel 2.

a hermetically sealed space 51 which is entirely sealed hermetically by sealing the evacuation port 50 is surrounded by the first panel 1, the second panel 2, and the seal member 41. The hermetically sealed space 51 is a heat insulation space evacuated to have a degree of vacuum of, for example, 0.1 Pa or lower.

In the evacuation port 50, a plate 46 is disposed which is a member used in a step (i.e., a sealing step to be described later) during the production process of the glass panel unit. The evacuation port 50 may be further stuffed with a resin such that the plate 46 is be covered with the resin.

Next, a production method by which the glass panel unit of the first embodiment may be manufactured will be described.

A method for producing the glass panel unit of the first embodiment includes a preparation step, a pillar arrangement step, a gas adsorbent disposition step, a bonding step, an evacuation step, and a sealing step.

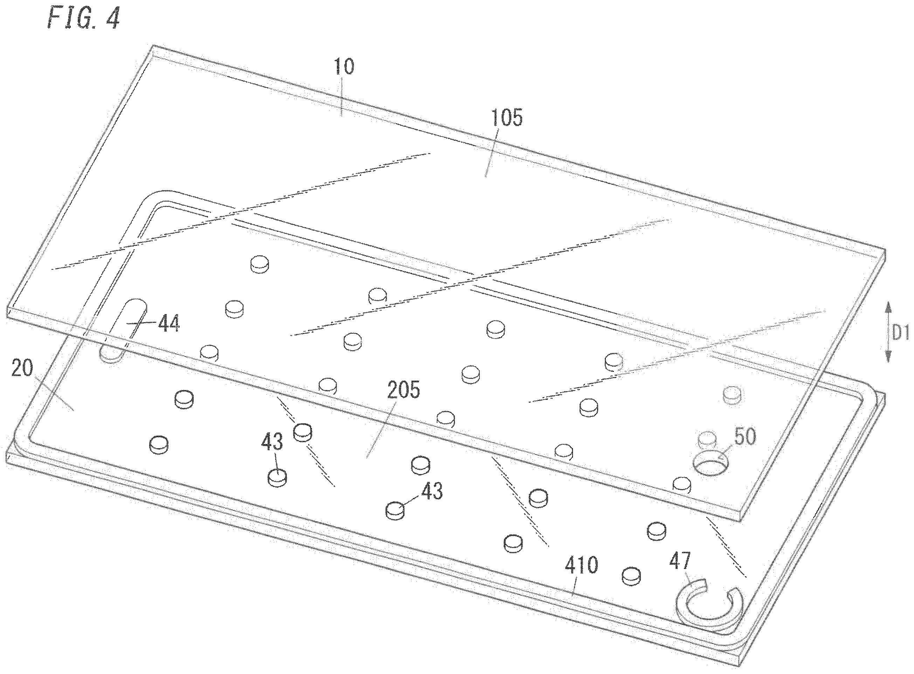

The preparation step includes preparing a first substrate 10 and a second substrate 20 (see, for example, FIG. 4). The first substrate 10 is subjected to the respective steps to form the first panel 1 of the glass panel unit. The second substrate 20 is subjected to the respective steps to form the second panel 2 of the glass panel unit.

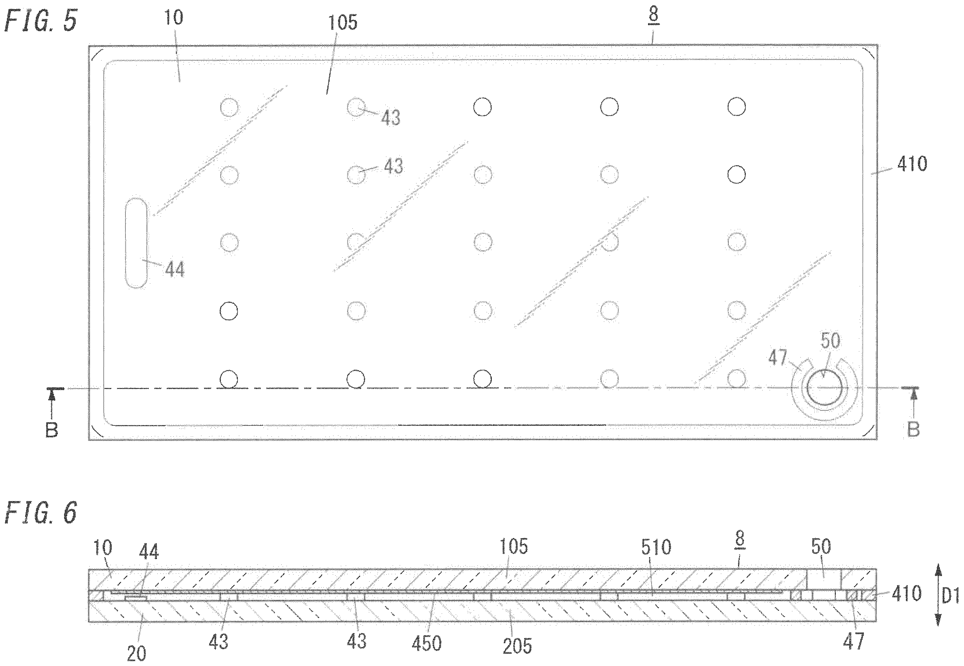

The first substrate 10 includes a glass panel 105 and a low-emissivity film 450 stacked on the glass panel 105 (see FIG. 6). The second substrate 20 includes a glass panel 205. In the following description, the glass panel 105 will be hereinafter referred to as a "first glass panel 105" and the glass panel 205 will be hereinafter referred to as a "second glass panel 205".

The first glass panel 105 is a member subjected to the respective steps to form the glass panel 15 of the first panel 1. The low-emissivity film 450 is a member subjected to the respective steps to form the low-emissivity film 45 of the first panel 1. The second glass panel 205 is a member subjected to the respective steps to form a glass panel 25 of the second panel 2.

The pillar arrangement step includes arranging the plurality of (a large number of) pillars 43 to be spaced apart from each other on one surface (an upper surface) of in the thickness direction D1 the second substrate 20 as illustrated in, for example, FIG. 4.

The gas adsorbent disposition step includes disposing the gas adsorbent 44 on the one surface (the upper surface) in the thickness direction D1 of the second substrate 20. Specifically, the gas adsorbent 44 which includes a getter material and which is in paste form is applied to the one surface in the thickness direction D1 of the second substrate 20 with an application apparatus such as a dispenser.

The getter material contained in the gas adsorbent 44 is a non-metal getter material having a porous structure and is, for example, a zeolite-based, activated carbon, or magnesium oxide getter material. The zeolite-based getter material contains ion-exchanged zeolite. Examples of the ion-exchanged substance include K, NH₄, Ba, Sr, Na, Ca, Fe, Al, Mg, Li, H, and Cu.

Since the gas adsorbent 44 contains the non-metal getter material having the porous structure, the gas adsorbent 44 can effectively adsorb a carbon hydride-based gas (e.g., CH₄, C₂H₆) and an ammonia gas (NH₃).

One of the pillar arrangement step and the gas adsorbent disposition step may be performed before the other, or both of the steps may be concurrently performed.

The bonding step includes bonding the first substrate 10 and the second substrate 20 together via an adhesive material 410 having a frame shape. Specifically, the adhesive material 410 and the first substrate 10 and the second substrate 20 with the plurality of pillars 43 are sandwiched therebetween are heated in a furnace to a first temperature. The first temperature is a temperature set to a higher temperature than the melting point of the adhesive material 410.

The adhesive material 410 melted by being heated is bonded to the first substrate 10 and the second substrate 20, thereby forming an internal space 510, in which the plurality of pillars 43 and the gas adsorbent 44 are surrounded by the first substrate 10, the second substrate 20, and the adhesive material 410. The adhesive material 410 is subjected to the respective steps to form the seal member 41 of the glass panel unit.

The adhesive material 410 is disposed to have a frame shape at an outer periphery on one surface in the thickness direction D1 of the second substrate 20 (the second glass panel 205) with an appropriate application apparatus (see FIG. 4). In addition, a bonding material as a material for the bonding portion 47 is disposed at a prescribed location on the one surface in the thickness direction D1 of the second substrate 20 with an appropriate application apparatus. The bonding material is bonded to the first panel 1 and the second panel 2 at part of a peripheral portion of the evacuation port 50. The bonding material suppresses the first panel 1 and the second panel 2 from separating from each other. In the first embodiment, the bonding material is disposed on both sides of the evacuation port 50 in the longitudinal direction of the second substrate 20. The bonding material has a length along a short direction of the second substrate 20, and the length of the bonding material is longer than the diameter of the evacuation port 50. Moreover, the bonding material has a width along the longitudinal direction of the second substrate 20, and the width of the bonding material ranges from a length equal to the diameter of the evacuation port 50 to a length one-half of the diameter of the evacuation port 50. The adhesive material 410 and the bonding material are preferably made of the same material such as glass frit.

The disposition of the adhesive material 410 and the bonding material may be performed before the pillar arrangement step, may be performed after the pillar arrangement step, or may be concurrently performed with the pillar arrangement step. Moreover, the disposition of the adhesive material 410 and the bonding material may be performed before the gas adsorbent disposition step, may be performed after the gas adsorbent disposition step, or may be concurrently performed with the gas adsorbent disposition step.

When the bonding step is completed, the evacuation port 50 of the first substrate 10 is located on an inner side of two bonding materials in plan view (when viewed along the thickness direction D1).

The respective steps are performed to form a work in progress 8 shown in FIGS. 5 and 6. The work in progress 8 is an intermediate product obtained during the production process of the glass panel unit.

The work in progress 8 is further subjected to the evacuation step and the sealing step.

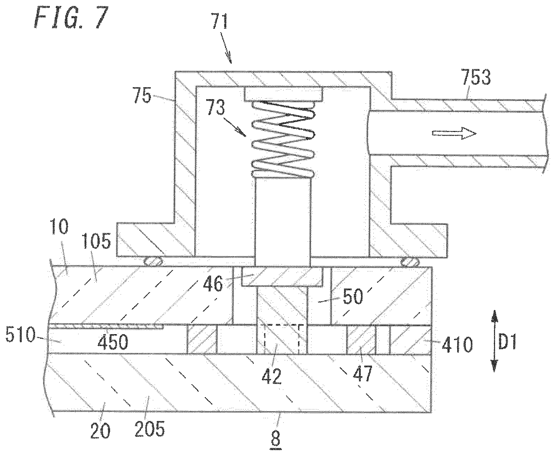

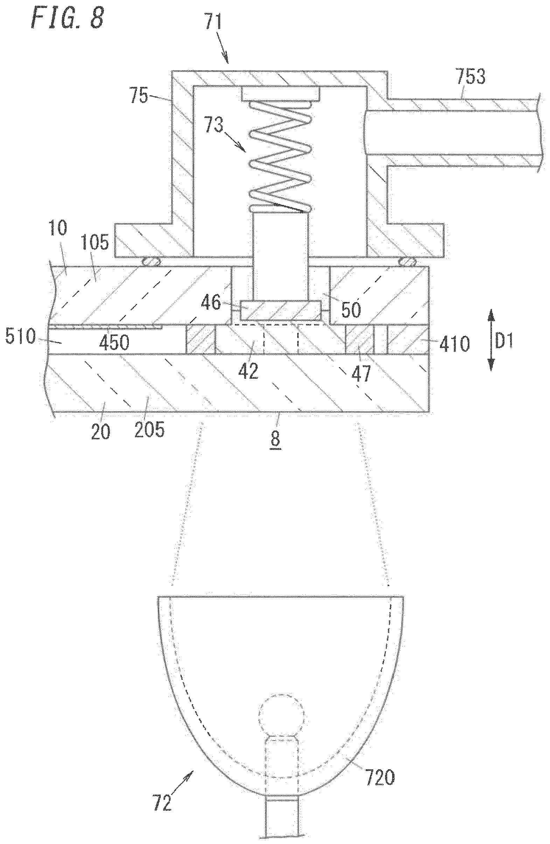

The evacuation step and the sealing step may be performed with the device shown in FIGS. 7 and 8. The device includes an evacuation mechanism 71, a heating mechanism 72, and a pressing mechanism 73.

The evacuation mechanism 71 includes an evacuation head 75 to be pressed against the work in progress 8 and a connector 753 connected to the evacuation head 75. The evacuation mechanism 71 is configured to evacuate, through the evacuation port 50, the internal space 510 created in the work in progress 8 and maintain an evacuated state in the internal space 510.

The heating mechanism 72 is disposed on an opposite side of the work in progress 8 from the evacuation head 75 (see FIG. 8). The heating mechanism 72 is configured to heat, in a non-contact manner, the pore sealing material 42 inserted in the evacuation port 50.

The heating mechanism 72 includes an irradiator 720. The irradiator 720 is configured to externally irradiate the pore sealing material 42 inserted in the evacuation port 50 through the second substrate 20 (the second glass panel 205) with an infrared ray (near infrared ray) to heat the pore sealing material 42.

The pressing mechanism 73 is provided to the evacuation head 75. The pressing mechanism 73 is configured to press, in a state where the pressure in the internal space 510 is reduced by the evacuation mechanism 71, the pore sealing material 42 inserted into the evacuation port 50 toward the second substrate 20.

During the evacuation step, the pore sealing material 42, which has a diameter smaller than the diameter of the evacuation port 50, and the plate 46 are inserted into the evacuation port 50 formed in the work in progress 8 (see FIG. 7). The pore sealing material 42 may be a solid sealing material of glass frit, for example. The pore sealing material 42 has a block shape. Alternatively, it is also preferable that the pore sealing material 42 has a vertically penetrating tubular shape. The plate 46 is disposed on an opposite side of the pore sealing material 42 from the second substrate 20.

The evacuation head 75 is hermetically pressed against a portion of the first substrate 10, the portion surrounding the opening of the evacuation port 50. At this time, the pore sealing material 42 and the plate 46 are elastically pushed toward the second substrate 20.

In this state, air in the evacuation head 75 is sucked (see the void arrow in FIG. 7) through a connector 753, thereby air in the internal space 510 is exhausted through the evacuation port 50 to achieve a vacuum in the internal space 510.

In the sealing step, the heating mechanism 72 and the pressing mechanism 73 seals the internal space 510 with the evacuated state in the internal space 510 being maintained.

That is, in the sealing step, the pore sealing material 42 is melted by being heated by the heating mechanism 72, and the pressing mechanism 73 exerts biasing force through the plate 46, thereby pushing the pore sealing material 42 against the second substrate 20. The pore sealing material 42 deforms in the internal space 510 to such an extent that the pore sealing material 42 comes into contact with an inner peripheral surface of the bonding portion 47. The bonding portion 47 has a cut-off which is sealed with the pore sealing material 42 thus deformed.

Thus, the evacuation port 50 is sealed up with the pore sealing material 42, and the internal space 510 is hermetically sealed up with the evacuated state in the internal space 510 being maintained. The internal space 510 is subjected to the respective steps to form the hermetically sealed space 51 of the glass panel unit.

Thereafter, the activation step may be performed.

In the activation step, the gas adsorbent 44 disposed in the internal space 510 of the work in progress 8 is locally heated by, for example, a local heating mechanism.

The activation step is preferably concurrently performed with the evacuation step. That is, while the internal space 510 is evacuated by the evacuation head 75, the gas adsorbent 44 is locally heated in a non-contact manner, and the gas adsorbent 44 is preferably activated in the internal space 510 in the evacuated state.

Since the gas adsorbent 44 contains a non-metal getter material (e.g., Cu ion-exchanged zeolite) having a porous structure, gas molecules of a carbon hydride-based gas, ammonia, or the like adsorbed on the gas adsorbent 44 desorb due to local heating, thereby activating the gas adsorbent 44. The gas molecules desorbed from the gas adsorbent 44 are sucked by the evacuation mechanism 71 through the evacuation port 50. When the gas adsorbent 44 is satisfactorily activated in the activation step, the sealing step is executed.

The local heating of the gas adsorbent 44 in the activation step may be performed after the sealing step. In this case, the interior of the internal space 510 sealed in the evacuated state is irradiated with a laser beam, thereby the gas adsorbent 44 is activated by local heating.

The glass panel unit obtained by the production method includes the hermetically sealed space 51 sealed in the evacuated stat, and the gas adsorbent 44 sufficiently activated is stored in the hermetically sealed space 51. Thus, the degree of vacuum in the hermetically sealed space 51 is suppressed from lowering, and the thermal insulation properties of the entirety of the glass panel unit are maintained.

In addition, in the production process of the glass panel unit, the temperature in the furnace is suppressed, which provides the advantage that energy consumed during the production is reduced. In contrast, an organic substance such as thread waste remains in the hermetically sealed space 51 of the glass panel unit, and thus, a carbon hydride-based gas is more likely to be generated. Moreover, when the temperature in the furnace is suppressed, a solvent in the adhesive material 410 is not completely evaporated but remains, and thus, a carbon hydride-based gas is more likely to be generated. In addition, the carbon hydride-based gas and/or the ammonia gas is more likely to be generated also from each pillar 43 containing a resin.

In contrast, in the method for producing the glass panel unit of the first embodiment, the gas adsorbent 44 containing a getter material (zeolite, activated carbon, or the like) activated by local heating effectively adsorbs the gas (carbon hydride-based gas, ammonia gas) thus generated.

Moreover, even if force separating the first panel 1 and the second panel 2 from each other is exerted, the force separating the first panel 1 and the second panel 2 from each other is received by the bonding portion 47, so that the bonding portion 47 makes it difficult to separate the first panel 1 and the second panel 2 from each other.

Note that the components of the glass panel unit and the steps for producing the glass panel unit may be accordingly modified in design.

For example, the glass panel unit formed by a method similar to the method described above may be further divided into a plurality of pieces by a so-called multi-production method to obtain a plurality of glass panel units. In this case, between the first substrate 10 and the second substrate 20, a partition dividing the hermetically sealed space 51 into a plurality of zones is formed.

When the multi-production method is performed, each of portions into which the first substrate 10 used in the manufacturing process is divided forms the first panel 1 of the glass panel unit which is to be eventually obtained. Similarly, each of portions into which the second substrate 20 used in the manufacturing step is divided forms the second panel 2 of the glass panel unit which is to be eventually obtained. Each of portions into which the adhesive material 410 is divided forms the seal member 41 of the glass panel unit which is to be eventually obtained.

Moreover, in the above-described method for producing glass panel unit, the plurality of pillars 43 are arranged on the one surface of the second substrate 20 in the pillar arrangement step, but the plurality of pillars 43 may be arranged on at least one of the first substrate 10 or the second substrate 20. That is, the plurality of pillars 43 may be arranged on the first substrate 10, or the plurality of pillars 43 may be disposed in a dispersed manner on the first substrate 10 and the second substrate 20.

Similarly, in the above-described method for producing the glass panel unit, the gas adsorbent 44 is disposed on the one surface of the second substrate 20 in the gas adsorbent disposition step, but the gas adsorbent 44 is disposed at least one of the first substrate 10 or the second substrate 20. That is, the gas adsorbent 44 may be disposed on the first substrate 10, or the gas adsorbent 44 may be disposed on both of the first substrate 10 and the second substrate 20. Two or more gas adsorbents 44 may be disposed.

Moreover, in the above-described method for producing the glass panel unit, the gas adsorbent 44 is irradiated with a laser beam through the second substrate 20, but the irradiation of the laser beam is performed through at least one of the first substrate 10 or the second substrate 20. When the irradiation of the laser beam is performed through the first substrate 10, the first substrate 10 preferably includes no low-emissivity film 450.

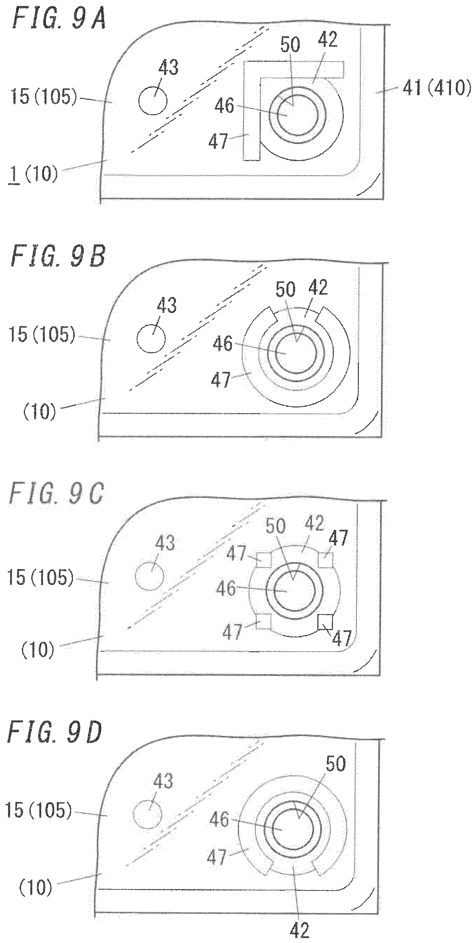

Variations of the bonding portion 47 are shown in FIGS. 9A to 9C.

In a first variation shown in FIG. 9A, a bonding portion 47 having an L-shape is disposed. The bonding portion 47 is disposed to face a seal member 41 with an evacuation port 50 being disposed between the bonding portion 47 and the seal member 41. That is, the seal member 41 is located on an opposite side of a peripheral portion of the evacuation port 50 from the bonding portion 47. The bonding portion 47 has a width ranging from a length equal to the diameter of the evacuation port 50 to a length one half of the diameter of the evacuation port 50. Between the bonding portion 47 and the seal member 41, a gap is formed. The gap is located on the same side as the seal member 41 when viewed from the bonding portion 47. Thus, in the evacuation step, while air in an internal space 510 moves to the evacuation port 50, movement of pillars 43 due to air is not easily caused.

Since the seal member 41 is located on the opposite side of the peripheral portion of the evacuation port 50 from the bonding portion 47, the bonding portion 47 and the seal member 41 more strongly suppress the first panel 1 and the second panel 2 from separating from each other.

In a second variation shown in FIG. 9B, a bonding portion 47 having a C-shape is disposed. The bonding portion 47 surrounds substantially the entire periphery of an evacuation port 50 but is not annular and has a gap formed at part of the bonding portion 47. The gap faces away from a seal member 41.

Since the bonding portion 47 surrounds substantially the entire periphery of the evacuation port 50, the first panel 1 and the second panel 2 are more suppressed from being separated from each other.

In a third variation shown in FIG. 9C, bonding portions 47 are arranged at four locations of a peripheral portion of an evacuation port 50. Note that the number of bonding portions 47 are not limited as long as the plurality of bonding portion 47 are located at the peripheral portion of the evacuation port 50 at intervals in the circumferential direction.

In a fourth variation shown in FIG. 9D, a bonding portion 47 having a C-shape is disposed. The bonding portion 47 surrounds substantially the entire periphery of an evacuation port 50 but is not annular and has a gap formed at part of the bonding portion 47. In the second variation shown in FIG. 9B, the gap faces away from the seal member 41, whereas in the fourth variation shown in FIG. 9D, the gap faces a seal member 41. Thus, in the evacuation step, while air in an internal space 510 moves to the evacuation port 50, movement of pillars 43 due to air is not easily caused.

Since the bonding portion 47 surrounds substantially the entire periphery of the evacuation port 50, the first panel 1 and the second panel 2 are more suppressed from being separated from each other.

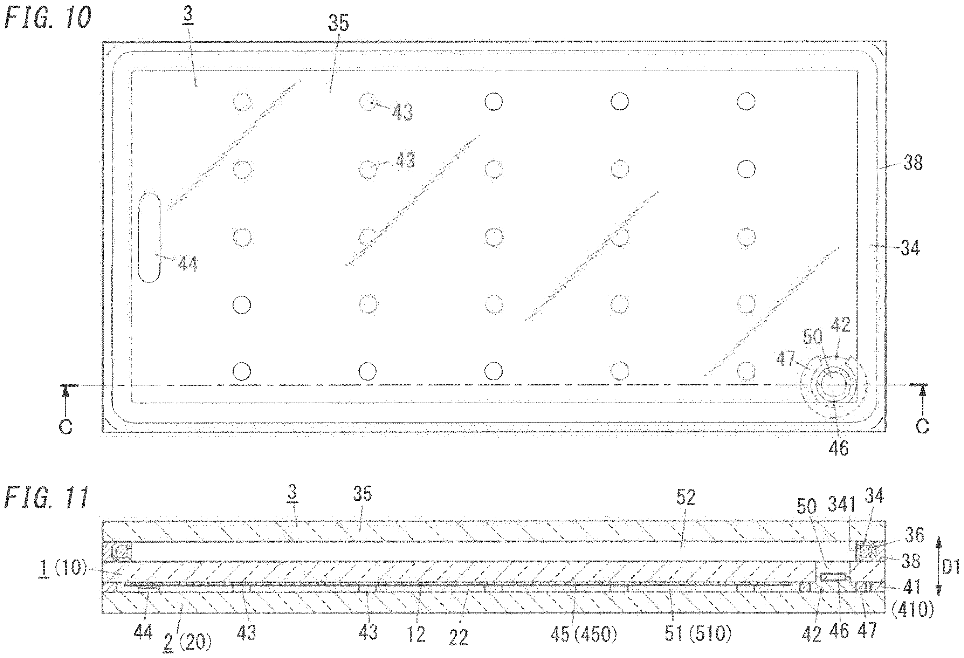

FIGS. 10 and 11 show a glass panel unit of a second embodiment. The glass panel unit of the second embodiment includes a third panel 3 in addition to the first panel 1 and the second panel 2 of the glass panel unit shown in FIGS. 1 to 3.

In the glass panel unit of the second embodiment, the third panel 3 overlies the first panel 1, and between the first panel 1 and the third panel 3, a space 52 which has been sealed is formed. Note that the disposition of the third panel 3 is not limited to this example. The third panel 3 may overlie the second panel 2, and between the second panel 2 and the third panel 3, the space 52, which has been sealed, may be formed.

The third panel 3 includes at least a glass panel 35. The glass panel 35 may include an appropriate coating.

Between respective peripheral portions of the third panel 3 and the first panel 1, interposed are a spacer 34 having a frame shape and a hollow and a second seal member 38 formed in a frame shape to cover an outer perimeter of the spacer 34. The hollow of the spacer 34 is filled with a desiccant 36. The space 52 is a space entirely surrounded by the second seal member 38 and the spacer 34.

The spacer 34 is made of metal such as aluminum and has a ventilation hole 341 formed on its inner perimeter. The hollow of the spacer 34 is communicated with the space 52 through the ventilation hole 341. The desiccant 36 is, for example, silica gel. The second seal member 38 is made of, for example, a highly airtight resin such as a silicon resin or butyl rubber. The space 52 is filled with a dry gas (e.g., a dry rare gas such as argon gas or dry air).

A method for producing the glass panel unit of the second embodiment includes a second bonding step in addition to the above-described steps. The second bonding step is a step of hermetically bonding the first panel 1 and the third panel 3 (or the second panel 2 and the third panel 3) with the second seal member 38 with the spacer 34 sandwiched between them.

In the glass panel unit of the second embodiment, the third panel 3 overlies the glass panel unit shown in FIGS. 1 to 3, but an object which the third panel 3 overlies is not limited to this example.

### (Glass Window)

Next, a glass window of a third embodiment will be described. The glass window of the third embodiment includes the glass panel unit of the first embodiment or the second embodiment.

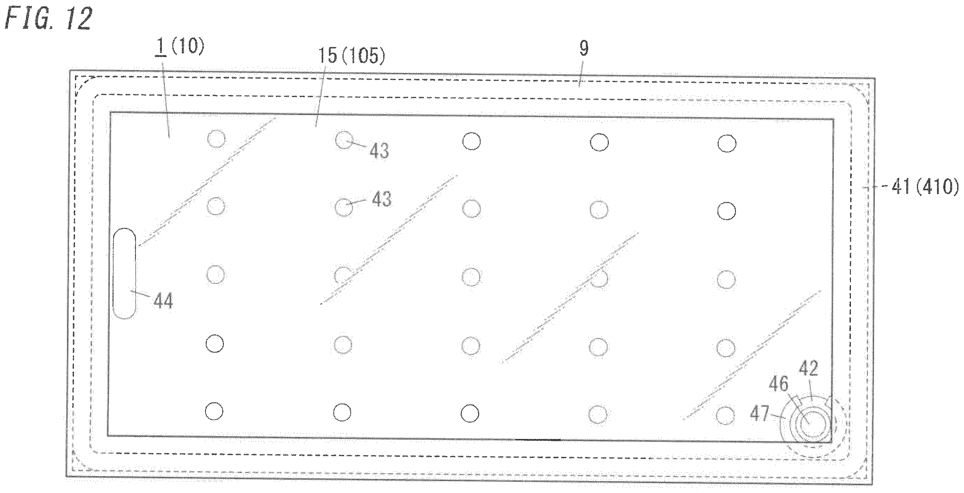

FIG. 12 illustrates a glass windows including the glass panel unit of the first embodiment. The glass window is a glass window obtained by fitting the glass panel unit shown in FIGS. 1 to 3 in a frame 9.

For example, the frame 9 is a window frame, and the glass window shown in FIG. 12 is a glass window including the glass panel unit of the first embodiment. The glass window is not limited to a movable window, but examples of the glass window includes a fixed window such as a display window.

Moreover, the glass window including the glass panel unit of the first embodiment is not limited to the glass window, but examples of the glass panel unit include other glass windows as entrance doors, room doors, and the like.

A method for producing the glass window including the glass panel unit according to the first embodiment includes an assembling step in addition to the respective steps of the method for producing the glass panel unit according to the first embodiment. The assembling step is a step of fitting the frame 9 having a rectangular shape to a peripheral portion of the glass panel unit. The glass window manufactured by these steps has high thermal insulation properties.

In the glass window shown in FIG. 12, the frame 9 is further fit to the glass panel unit shown in FIGS. 1 to 3, but an object to which the frame 9 is fit is not limited to this example. For example, the frame 9 may be fit to a glass panel unit obtained by the multi-production method described above, or the frame 9 may be fit to a glass panel unit of any one of the first to third variation.

A glass panel unit and a glass window including the glass panel unit have been described above. However, the glass panel unit and the glass window including the glass panel unit are not limited to the embodiments and variations shown in the drawings but may accordingly be modified in design, or components of the variations may accordingly be combined with each other.

### (Effects)

As can be clearly seen from the embodiments and variations described above, a glass panel unit of a first aspect includes a first panel (1) including a glass panel (15), a second panel (2) including a glass panel (25), a seal member (41) having a frame shape, a pore sealing material (42), and a bonding portion (47). The second panel (2) is disposed to face the first panel (1). The seal member (41) hermetically bonds a peripheral portion of the first panel (1) and a peripheral portion of the second panel (2) together such that a hermetically sealed space (51) in an evacuated state is formed between the first panel (1) and the second panel (2). The pore sealing material (42) hermetically seals an evacuation port (50) formed in one of the first panel (1) and the second panel (2). The bonding portion (47) is bonded to the first panel (1) and the second panel (2) at part of a peripheral portion of the evacuation port (50).

According to the first aspect, even if force separating the first panel (1) and the second panel (2) from each other is exerted, the force separating the first panel (1) and the second panel (2) from each other is received by the bonding portion (47), which makes it difficult to separate the first panel 1 and the second panel (2) from each other. Thus, an exhaust pipe does not protrude from the glass panel unit, and the evacuation port (50) is tightly sealed.

A second aspect is realized in combination with the first aspect. In the second aspect, the bonding portion (47) is located at the part of the peripheral portion of the evacuation port (50). The seal member (41) is located at an opposite part of the peripheral portion of the evacuation port (50) from the bonding portion (47).

According to the second aspect, the first panel (1) and the second panel (2) are more strongly suppressed from separating from each other.

A third aspect is realized in combination with the first or second aspect. In the third aspect, the glass panel unit further includes a third panel (3) and a second seal member (38) having a frame shape. The third panel (3) includes a glass panel (35) and is disposed to face one panel of the first panel (1) and the second panel (2). The second seal member is hermetically bonded to the one panel and the third panel (3) such that a hermetically sealed space is formed between the one panel and the third panel (3).

According to the third aspect, a glass panel unit having improved thermal insulation properties is obtained.

A fourth aspect is realized in combination with any one of the first to third aspects. In the fourth aspect, a glass window includes the glass panel unit of any one of the first to third aspect and a frame (9) in which a peripheral portion of the glass panel unit is fit.

According to the fourth aspect, a glass window having an exhaust pipe not protruding.

A method for producing the glass panel unit of a fifth aspect includes a preparation step, a bonding step, an evacuation step, and a sealing step. The preparation step is a step of preparing a first substrate (10) including a glass panel (15) and a second substrate (20) including a glass panel (25). The bonding step is a step of bonding the first substrate (10) and the second substrate (20) together via an adhesive material (410) having a frame shape and a bonding material at a peripheral portion of an evacuation port (50) formed in one of the first substrate (10) and the second substrate (20) to form an internal space (510) surrounded by the first substrate (10), the second substrate (20), and the adhesive material (410). The evacuation step is a step of evacuating the internal space (510). The sealing step is a step of sealing up the internal space (510) in an evacuated state.

According to the fifth aspect, a glass panel unit in which the first panel (1) and the second panel (2) are less likely to be separated is produced.

A sixth aspect is realized in combination with the fifth aspect. In the sixth aspect, in the bonding step, the bonding material is located at part of the peripheral portion of the evacuation port (50), and the adhesive material (410) is located at an opposite part of the peripheral portion of the evacuation port (50) from the bonding material.

According to the sixth aspect, a glass panel unit in which the first panel (1) and the second panel (2) are much less likely to be separated is produced.

A seventh aspect is realized in combination with the fifth or sixth aspect. The seventh aspect includes a second bonding step of bonding a third panel (3) including a glass panel (35) to the glass panel unit manufactured by the method of the fifth or sixth aspect via a second seal member (38) having a frame shape.

According to the seventh aspect, a glass panel unit having higher thermal insulation properties is obtained.

An eighth aspect is realized in combination with any one of the fifth to seventh aspects. In the eighth aspect, a method for producing a glass window includes an assembling step of fitting the glass panel unit produced by the method of any one of the fifth to seventh aspects in a frame (9).

According to the eighth aspect, a glass window having an exhaust pipe not protruding.

### Reference Signs List

- 1: FIRST PANEL
- 10: FIRST SUBSTRATE
- 15: GLASS PANEL
- 2: SECOND PANEL
- 20: SECOND SUBSTRATE
- 25: GLASS PANEL
- 3: THIRD PANEL
- 35: GLASS PANEL
- 38: SECOND SEAL MEMBER
- 41: SEAL MEMBER
- 410: ADHESIVE MATERIAL
- 42: PORE SEALING MATERIAL
- 47: BONDING PORTION
- 50: EVACUATION PORT
- 51: HERMETICALLY SEALED SPACE
- 510: INTERNAL SPACE

## Claims

1. A glass panel unit, comprising:
a first panel including a glass panel;
a second panel including a glass panel and disposed to face the first panel;
a seal member hermetically bonds a peripheral portion of the first panel and a peripheral portion of the second panel together such that a hermetically sealed space in an evacuated state is formed between the first panel and the second panel;
a pore sealing material hermetically seals an evacuation port formed in one of the first panel and the second panel; and
a bonding portion bonded to the first panel and the second panel at part of a peripheral portion of the evacuation port.

2. The glass panel unit of claim 1, wherein
the bonding portion is located at the part of the peripheral portion of the evacuation port, and
the seal member is located at an opposite part of the peripheral portion of the evacuation port from the bonding portion.

3. The glass panel unit of claim 1 or 2, further comprising:
a third panel including a glass panel and disposed to face one panel of the first panel and the second panel; and
a second seal member having a frame shape, the second seal member being hermetically bonded to the one panel and the third panel such that a hermetically sealed space is formed between the one panel and the third panel.

4. A glass window, comprising:
the glass panel unit of any one of claims 1 to 3; and
a frame in which a peripheral portion of the glass panel unit is fit.

5. A method for producing a glass panel unit, the method comprising:
a preparation step of preparing a first substrate including a glass panel and a second substrate including a glass panel;
a bonding step of bonding the first substrate and the second substrate together via an adhesive material having a frame shape and a bonding material at a peripheral portion of an evacuation port formed in one of the first substrate and the second substrate to form an internal space surrounded by the first substrate, the second substrate, and the adhesive material;
an evacuation step of evacuating the internal space; and
a sealing step of sealing up the internal space in an evacuated state.

6. The method of claim 5, wherein
in the bonding step,
the bonding material is located at part of the peripheral portion of the evacuation port, and
the adhesive material is located at an opposite part of the peripheral portion of the evacuation port from the bonding material.

7. A method for producing a glass panel unit, the method comprising:
a second bonding step of bonding a third panel including a glass panel to the glass panel unit manufactured by the method of claim 5 or 6 via a second seal member having a frame shape.

8. A method for producing a glass window, the method comprising an assembling step of fitting the glass panel unit produced by the method of any one of claims 5 to 7 in a frame.
